# EUROPÄISCHE PATENTSCHRIFT

(11) **EP 0 512 313 B1**
(45) Veröffentlichungstag und Bekanntmachung des Hinweises auf die Patenterteilung: **08.11.1995**
(21) Anmeldenummer: 92106787.2
(22) Anmeldetag: 21.04.1992
(51) Int. Cl.: G01B 11/06

(54) **Verfahren und Messanordnung zur berührungslosen on-line Messung einer Oberflächenstruktur oder einer Schichtdicke**
Procedure and device for non-contact on-line measurements of a surface structure or a layer thickness
Procédé et dispositif de mesure on-line sans contact d'une structure d'une surface ou d'une épaisseur d'une couche

(30) Priorität: 06.05.1991 DE 4114672
(43) Veröffentlichungstag der Anmeldung: 11.11.1992
(73) Patentinhaber: HOECHST AKTIENGESELLSCHAFT, 65926 Frankfurt am Main (DE)
(72) Erfinder: Schmidt, Hugo, Dr. Dipl. Phys., W-6300 Giessen-Lützellinden (DE); Ruckszio, Manfred, W-6204 Taunusstein (DE); Haas, Raimund, Dr. Dipl. Ing., W-6230 Frankfurt/M. 80 (DE)

(56) Entgegenhaltungen:
- GB-A- 2 167 855
- GB-A- 2 220 065
- TECHNISCHES MESSEN TM, Bd. 49, Nr. 11, November 1982, München DE, Seiten 391-398; C. LINHART et al.: "Berührungslose Bestimmung der Dicke von Oberflächenbeschichtungen durch thermische Messverfahren"

## Beschreibung

Die Erfindung betrifft ein Verfahren zur berührungslosen on-line Messung der Oberflächenstruktur bzw. Dicke eines Materials oder einer Schicht auf einem platten- oder bandförmigen Material sowie eine Meßanordnung.

Ein wesentliches Qualitätsmerkmal von Metalloberflächen sind Texturparameter. Am bekanntesten ist die Darstellung der Oberflächenrauheit, wobei die umfangreichen Daten eines gemessenen Rauheits-Profilschnittes in der Praxis meist auf wenige charakteristische Kenngrößen, wie z.B. die Rauhtiefe Ra und die mittlere Rauhtiefe Rz reduziert werden.

Bei der Rauheitsmessung ist es im allgemeinen nicht notwendig, die gesamte Oberfläche lückenlos abzutasten und zu vermessen. Es genügt, wenn eine hinreichend große Anzahl von Messungen eine ausreichende statistische Aussage ermöglichen. Die Erfassung der Rauheit mittels einer on-line Messung bei schnell bewegtem Material ist mit erheblichen Schwierigkeiten verbunden. Das klassische Tastschnittverfahren ist bei Geschwindigkeiten größer als 20 m/min keinesfalls in der Lage, zufriedenstellende Ergebnisse zu liefern. Daher werden solche on-line Messungen seit langem auf optischer Basis durchgeführt.

Aus der Literaturstelle "Technisches Messen TM, Band 49, Nr. 11, November 1982, Seiten 391 bis 398; Linhardt et al.: "Berührungslose Bestimmung der Dicke von Oberflächenbeschichtungen durch thermische Meßverfahren" ist eine Meßanordnung bekannt, mit der die Oberfläche eines Materials, das eine Beschichtung trägt, über einen Infrarotstrahler erwärmt wird und der zeitliche Verlauf des Aufheizvorgangs als Maß für die Schichtdicke herangezogen wird. Durch das Bestrahlen der beschichteten Oberfläche in einem begrenzten Flächenstück mit einem Infrarotstrahler oder mit Infrarotlasern wird eine definierte Energiemenge bzw. Leistung in das Material eingebracht, wodurch dieses sich aufheizt. Im Zentrum der bestrahlten Fläche ergibt sich je nach Wärmeleitfähigkeit und Wärmekapazität des Materials ein charakteristischer Temperaturverlauf, der Rückschlüsse auf die Schichtdicke erlaubt. Je nach Materialpaarung spielt die Wärmekapazität, beispielsweise gut leitende Schicht auf nicht leitendem Material ergibt einen Temperaturanstieg, oder die Wärmeleitfähigkeit, d.h. schlecht leitende Schicht auf gut leitendem Material ergibt Temperaturgleichgewicht, die entscheidende Rolle. Der Temperaturverlauf des Materials wird anhand der vom Material emittierten Eigenstrahlung mit einem Wärmestrahlungsmeßgerät beobachtet.

Aus der EP-A - 0 413 943 sind ein Meßverfahren und eine Meßanordnung zum Bestimmen der Dicke und der Zusammensetzung einer Zinkphosphatschicht auf einer Metalloberfläche bekannt. Die Phosphatschicht wird mit Infrarotstrahlung bestrahlt, die zumindest teilweise die Phosphatschicht durchstrahlt. Das reflektierte Licht von der oberen und unteren Oberfläche der Phosphatschicht ergibt eine Gesamtreflexionsintensität, die eine Funktion der optischen Parameter der Phosphatkomponenten und des Verhältnisses der Komponenten entsprechend den optischen Parametern ist. Für den Fall, daß eine Phosphatschicht zwei Zinkphosphatkomponenten enthält, unterscheidet sich die gemessene Reflexionsintensität bei zwei unterschiedlichen Wellenlängen insofern, als die optischen Eigenschaften der Zinkphosphatkomponenten auch eine Funktion der Frequenz sind. Die gemessene Reflexionsintensität und ihre funktionelle Abhängigkeit von dem Verhältnis der Komponenten innerhalb der Phosphatschicht können zusammen mit den bekannten Werten der optischen Parameter von jeder Komponente zur Berechnung des Anteils jeder Komponente innerhalb der Phosphatschicht herangezogen werden. Bei der Meßanordnung wird streng monochromatisches Licht eines Lasers eingesetzt. Monochromatisches Licht ist für die Meßanordnung eine Voraussetzung, weil nur dann sich Interferenzmuster ausbilden können, die zur Bestimmung der Schichtdicke herangezogen werden. Bei der Dickenbestimmung handelt es sich um eine Zweistrahlintereferenzmethode, wie auf Seite 5, Zeile 2ff des Dokuments ausgeführt ist, da zwei Strahlen in der Meßanordnung interferieren, so daß sich Interferenzmuster ausbilden, deren Auswertung die Schichtdicke ergibt.

In der Firmendruckschrift der Firma Sick GmbH Optik-Elektronik, München "SORM Sick optisches Rauheitsmeßsystem" ist ein Rauheitsmeßgerät beschrieben, das im Bereich der metallverarbeitenden Industrie als on-line Meßgerät zur kontinuierlichen Prozeßüberwachung eingesetzt wird. Das Meßgerät erzeugt mit Hilfe eines Halbleiterlasers einen feinen Lasermeßstrahl auf der Materialoberfläche. Der Lichtfleckdurchmesser beträgt ca. 10 µm. Durch die Oberflächenstruktur wird das auftreffende Licht abhängig vom Flankenwinkel der Oberflächenfacette in eine bestimmte Raumrichtung reflektiert. Die Hauptrichtung der Reflexion wird von einen Laserdiodenempfängerarray erfaßt und in ein winkelabhängiges analoges Signal umgewandelt. Dieses Analogsignal wird digitalisiert, und das Oberflächenhöhenprofil aufgrund der Flankenwinkeldaten und der Vorschubinformationen zurückgerechnet. Als Rohdaten wird somit ein Profilverlauf erhalten, der in etwa mit dem einer mechanischen Messung vergleichbar ist. Anschließend werden diese Rohdaten in üblicher Weise ausgewertet und die genormten Rauheitskenngrößen, wie Ra, Rz, ermittelt und ausgegeben. Bei dieser Messung fällt die von der Oberfläche rückgestreute Intensitätsverteilung in Form einer Streukeule über eine Anzahl Linsen auf die zugeordneten, ringförmig um den Laserlichtfleck angeordneten Fotoempfänger. Dieses Fotoempfängerarray ist in Form eines PSD-Sensors (position sensitive detector) verschaltet. An jedem Meßpunkt wird direkt die Richtung des Schwerpunktes der Streukeule gemessen. Damit wird an jedem Oberflächenmeßpunkt optisch die Flankensteilheit der jeweiligen Oberflächenfacette bestimmt. Bei Bewegung der zu messenden Oberfläche unter dem Meßkopf wird durch Rückintegration das Oberflächenprofil errechnet. Der Rauheitsmeßbereich beträgt für Ra 0,05 bis 2,5 µm, und die Materialgeschwindigkeit liegt im Bereich von 0,3 bis 30 m/sec. Dieses Meßgerät ist sehr aufwendig, da der optische Meßkopf neben einem Halbleiterlaser das Empfängerarray, eine Autofokuseinrichtung zur Nachführung des optischen Meßkopfes und eine Signalvorverarbeitung enthält. Desweiteren ist ein Auswertrechner mit zwei floppy disk Laufwerken, einer Schnittstelle für mehrere optische Meßköpfe und eine Zentraleinheit erforderlich.

In der Firmendruckschrift "Profilmeßplatz RM 600 2-D" der Firma Rodenstock, München, ist ein Oberflächenmeßsystem RM 600 beschrieben, mit dem schnell und berührungslos Oberflächenstrukturen zwischen 0,02 µm und 600 µm erfaßt werden können. Das Meßsystem umfaßt im wesentlichen drei Komponenten, nämlich einen optischen Abstandssensor, eine lineare oder X/Y Vorschubeinheit und einen Steuerrechner mit Farbbildschirm, Drucker und Software-Paket. Kern des Systems ist ein optischer Sensor, der mit einem Laserfokus von 1 oder 2 µm Durchmesser Abstandsänderungen zwischen minimal 0,002 µm und maximal 600 µm registriert. Bei der Messung wird das Meßobjekt gleichmäßig am Sensor vorbeibewegt. Die hierbei anfallenden Meßwerte bilden ein Höhenprofil, das vom Steuerrechner als Grafik ausgegeben und vermessen werden kann. Durch geeignete Filterung sind Aussagen über einzelne Oberflächenparameter, wie Rauheit, Welligkeit etc. möglich.

Der optische Abstandssensor arbeitet mit einem Infrarot-Laser, dessen Strahl auf die Oberfläche des Meßobjekts fokussiert wird. Auf der Meßoberfläche entsteht je nach Sensortyp ein Leuchtfleck von 1 oder 2 µm Durchmesser, der im Sensor auf einen Fokusdetektor abgebildet wird. Ändert sich der Abstand zur Meßfläche, so liefert der Detektor ein Regelsignal für die Fokusnachführautomatik. Ein Tauchspulensystem verschiebt dann das Objektiv, bis der Laserstrahl wieder exakt auf der Oberfläche des Meßobjektes fokussiert ist.

Da der Fokusabstand konstant ist, entsprechen die Bewegungen des Objektivs exakt dem Höhenverlauf der Meßfläche. Die jeweilige Position des Objektivs wird von einem induktiven Sensor erfaßt und liefert ein Meßsignal, das von den Reflexionseigenschaften der Meßoberfläche unabhängig ist.

Dieses Oberflächen-Meßsystem ist nicht für die Messung an schnellaufenden Materialien geeignet.

Neben der Oberflächenstruktur von Materialien ist auch deren Oberflächenbeschaffenheit ein Qualitätsmerkmal, das zur Steuerung der Verarbeitung von solchen Materialien herangezogen werden kann. Die Oberflächenbeschaffenheit bestimmt u.a. das Reflexionsvermögen bzw. den Remissionswert der Oberfläche für einfallende Strahlung im Ultra- bzw. Infrarotbereich. So ist beispielsweise die Aluminiumoxidschichtdicke auf der Oberfläche eines Aluminiumbandes oder einer Aluminiumplatte der bestimmende Parameter für die Reflexion von auf die Materialoberfläche einfallender Infrarotstrahlung.

Dies gilt auch in gleicher Weise für Schichten anderer Zusammensetzung, wie beispielsweise Schichten aus lichtempfindlichen Substanzen, mit denen bei der Herstellung von Druckplatten Aluminiumbänder oder -platten beschichtet werden. Mit der Zunahme der Beschichtungsdicke solcher Materialien an der Oberfläche verliert die Oberfläche an Reflexionsvermögen, und die reflektierte Infrarot- bzw. Wärmestrahlung nimmt ab.

Handelt es sich beispielsweise um transparente Materialien, wie Kunststoffolien, so nimmt mit zunehmender Dicke dieser Materialien deren Reflexionsvermögen auf der Oberfläche ab.

Aufgabe der Erfindung ist es, ein Verfahren zu entwickeln, das aufgrund des Reflexionsverhaltens der auf die Materialoberfläche eingestrahlten Strahlung eine Bestimmung der Oberflächenbeschaffenheit, bedingt durch Oxidgewicht, oder der Schichtdicke einer Oberflächenschicht bzw. der Materialdicke in einfacher Weise ermöglicht.

Diese Aufgabe wird erfindungsgemäß dadurch gelöst, daß ein umrissener Meßbereich der Materialoberfläche auf konstanter Temperatur gehalten wird, daß der Meßbereich mit schräg einfallender Infrarotstrahlung eines Infrarotstrahlers beaufschlagt wird, und im Sichtfeld einer Meßeinrichtung für die reflektierte Strahlung liegt, und daß die Temperatur der vom Meßbereich auf der Materialoberfläche reflektierten Infrarotstrahlung gemessen und mit einer Kalibrierkurve verglichen wird, die so erstellt wird, daß bei gleichbleibender Temperatur des Infrarotstrahlers die Temperatur der von der Oberfläche reflektierten Infrarotstrahlung für unterschiedliche Oberflächenstrukturen bzw. Dicken des Materials gemessen wird.

In Weiterführung des Verfahrens wird die gemessene Temperatur der reflektierten Infrarotstrahlung mit einem Sollwert der Temperatur verglichen und aus dem Vergleich ein Signal für die Steuerung der Behandlung der Materialoberfläche erhalten.

Zweckmäßigerweise wird das Material im Meßbereich durch einen Infrarotstrahler mit Infrarotstrahlung konstanter Temperatur, bevorzugt im Bereich von 373 bis 393 K, bestrahlt.

Die weitere Ausgestaltung des erfindungsgemäßen Verfahrens ergibt sich aus den Merkmalen der Ansprüche 4 bis 8.

Die Meßanordnung zur berührungslosen on-line-Messung der Oberflächenstruktur bzw. Dicke eines Materials oder einer Schicht auf einem platten- oder bandförmigen Material zeichnet sich dadurch aus, daß die Meßanordnung aus einem Infrarotstrahler und einem Infrarotthermometer besteht, daß der Strahlengang des Infrarotstrahlers schräg auf die Materialoberfläche innerhalb eines umrissenen Meßbereichs gerichtet ist, daß der gesamte Meßbereich der Materialoberfläche, der im Sichtfeld des Infrarotthermometers liegt, mit Infrarotstrahlung im Bereich von 373 bis 393 K beaufschlagt ist, daß eine Vergleichseinrichtung vorhanden ist, in der der Temperaturverlauf der von der Materialoberfläche reflektierten Strahlung in Abhängigkeit von den Oberflächenstrukturen, wie Schichtdicke, Oxidgewicht, oder von der Materialdicke abgespeichert ist und daß die Temperatur der reflektierten Infrarotstrahlung mit dem gespeicherten Temperaturverlauf verglichen wird, um die der gemessenen Temperatur entsprechende Oberflächenstruktur bzw. Materialdicke zu bestimmen.

Die Meßanordnung umfaßt zweckmäßigerweise eine blanke, beheizte Stahlwalze, über die das Material geführt ist, das mit schräg einfallender Infrarotstrahlung beaufschlagt ist.

In Ausgestaltung der Meßanordnung wird ein Sollwert der Temperatur in die mit der Meßanordnung verbundene Vergleichseinrichtung eingespeist und mit den jeweiligen gemessenen Temperaturwerten verglichen, um aus dem Differenzsignal ein Steuersignal zu erhalten, und ist ein Ausgang der Vergleichseinrichtung mit einer Steuerung einer Bearbeitungseinrichtung für das Material verbunden.

Die Erfindung wird im folgenden anhand eines zeichnerisch dargestellten Ausführungsbeispiels näher erläutert. Es zeigen:

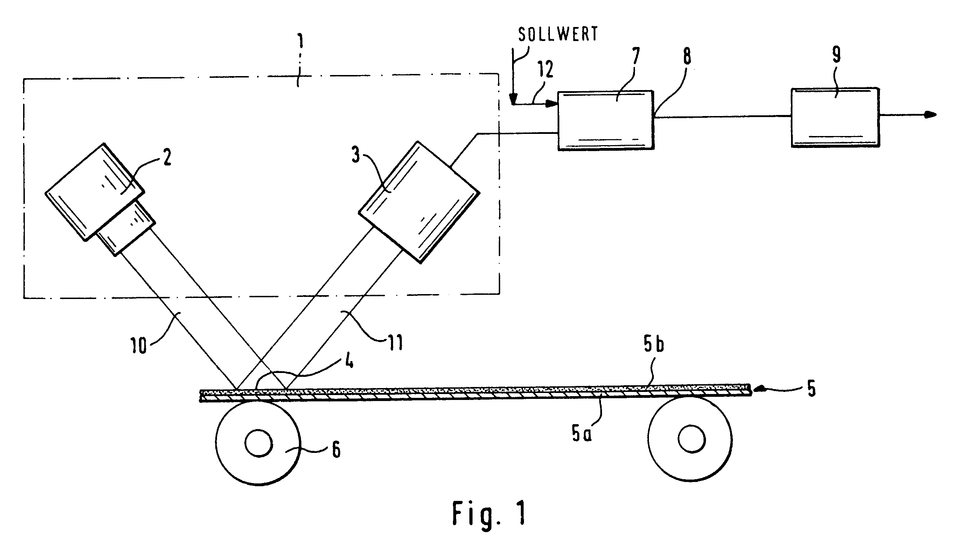

- Fig. 1: schematisch eine Meßanordnung nach der Erfindung,
- Fig. 2: in einem Diagramm den Zusammenhang zwischen der gemessenen Temperatur der von einer Aluminiumoxidoberfläche reflektierten IR-Strahlung und dem Aluminiumoxidgewicht einer Aluminiumoxidschicht auf einem aufgerauhten Aluminiumband, und
- Fig. 3: in einem Diagramm, ähnlich der Fig. 2, den Temperaturverlauf der von einer transparenten Kunststoffolie reflektierten IR-Strahlung in Abhängigkeit von der Foliendicke.

Eine Meßanordnung 1 zur berührungslosen on-line-Messung der Oberflächenstruktur bzw. der Dicke einer Schicht auf einem platten- oder bandförmigen Material 5 besteht aus einem Infrarotstrahler 2 und einem Infrarot-Thermometer 3. Der Strahlengang 10 des Infrarotstrahlers 2 ist schräg auf die Materialoberfläche innerhalb eines umrissenen Meßbereichs 4 gerichtet. Dieser Meßbereich 4 befindet sich oberhalb einer Stahlwalze 6, über welche das Material 5 geführt ist. Die Stahlwalze 6 ist beheizt und wird auf einer Temperatur gleich oder größer 373 K gehalten, wobei ein Temperaturbereich von 373 bis 393 K bevorzugt ist.

Das Infrarot-Thermometer 3 ist mit einer Vergleichseinrichtung 7 elektrisch verbunden, in welcher der Temperaturverlauf der von der Materialoberfläche reflektierten Strahlung in Abhängigkeit von den Oberflächenstrukturen, wie Schichtdicke, Oxidgewicht oder von der Materialdicke abgespeichert wird. Ein Ausgang 8 dieser Vergleichseinrichtung 7 ist mit einer Steuerung 9 einer Bearbeitungseinrichtung für das Material 5 verbunden. Bei dieser Bearbeitungseinrichtung, die nicht gezeigt ist, kann es sich beispielsweise um ein Säurebad handeln, durch das ein Aluminiumband hindurchgeführt wird. Durch die Regelung der Säurekonzentration im Säurebad mittels des Ausgangssignals der Vergleichseinrichtung 7 kann dann die Aufrauhung und letztendlich das Oxidgewicht der sich ausbildenden Oxidschicht auf der Aluminiumoberfläche des Bandes weitgehend konstant gehalten werden.

Die in die Vergleichseinrichtung 7 eingespeisten, gemessenen Temperaturwerte werden mit einem Sollwert der Temperatur verglichen, wobei im Falle von Übereinstimmung über den Ausgang 8 kein Ausgangssignal erhalten wird. Nur im Falle von Abweichungen zwischen dem Sollwert und dem momentanen Temperaturmeßwert wird ein Ausgangssignal von der Vergleichseinrichtung 7 erhalten, das dann zur Steuerung der Bearbeitungseinrichtung für das Material verwendet wird.

Wenn an der Materialoberfläche, beispielsweise einer Aluminiumoberfläche, sei es durch einen veränderten elektrischen Strom oder unterschiedliche Konzentrationen des Säurebades, durch das das Aluminiumband hindurchgeführt wird, durch verschiedene Geschwindigkeiten oder durch Unterschiede im Material zu unterschiedlichen Aufrauhungen kommt, hat die Materialoberfläche einen veränderten Remissionsgrad. Diese Veränderung wird durch das Infrarot-Thermometer als eine Temperaturänderung erfaßt und zur Steuerung der Bearbeitungseinrichtung benutzt. Die Voraussetzung für diese Meßmethode ist, daß vorab für ein bestimmtes Material 5, das unterschiedliche Oberflächenbeschaffenheit in bezug auf das Oxidgewicht einer sich ausbildenden Oxidschicht 5b auf der Oberfläche, die Dicke einer aufgetragenen lichtempfindlichen Schicht, gleichfalls 5b, auf der Oberfläche oder die Aufrauhung der Oberfläche hat, der Temperaturverlauf in Abhängigkeit von den Oberflächenstrukturen bzw. der Oberflächenbeschaffenheit empirisch ermittelt wird. Dieser Temperaturverlauf ist gleichbedeutend mit dem Remissionsgrad der Materialoberfläche bei unterschiedlichen Strukturen bzw. unterschiedlicher Beschaffenheit der Oberfläche. Die Schicht 5b liegt auf einer Trägerschicht 5a auf.

Die Oberflächentemperatur des Infrarotstrahlers 2 wird während der Messung konstant, z.B. auf 473 K, gehalten. Die auf die zu vermessende Oberfläche in dem Meßbereich 4 schräg einfallende Infrarotstrahlung bzw. Wärmestrahlung wird innerhalb eines Strahlenganges 11 reflektiert, wobei Sorge dafür getragen werden muß, daß der gesamte Meßbereich 4 der Oberfläche, der im Sichtfeld des Infrarot-Thermometers 3 liegt, im Bereich von 373 bis 393 K wärmebestrahlt wird.

Dem Meßverfahren liegt der Gedanke zugrunde, daß die reflektierte Wärmestrahlung des Infrarotstrahlers 2 von der Oberflächenstruktur bzw. der Oberflächenbeschaffenheit der Materialoberfläche, auf die die Strahlung auftrifft, abhängt. So zeigt sich zum Beispiel, daß eine nicht oxidierte Oberfläche die Wärmestrahlung stärker als eine oxidierte Aluminiumoberfläche reflektiert. Je dicker die Oxidschicht an der Aluminiumoberfläche ist, um so weniger wird die auftreffende Wärmestrahlung reflektiert. Die Oxidschichtdicke ist also entscheidend für das Reflexionsvermögen bzw. den Remissionswert der Materialoberfläche. Das Meßverfahren ist nicht nur auf die Bestimmung von Aluminiumoxidschichten an Aluminiumoberflächen beschränkt, sondern kann bei allen Materialien eingesetzt werden, bei denen die Oberflächen im unbedeckten Zustand Infrarotstrahlung gut reflektieren, d.h. aus Materialien bestehen, die keine schwarzen Körper sind, da diese bekannterweise für alle Wellenlängen das Absorptionsvermögen Eins haben. Werden solche Materialien mit Schichten, die einen größeren Remissionswert bzw. Reflexionsgrad besitzen, abgedeckt, d.h. bei Zunahme der Dicke solcher Schichten an der Oberfläche, so verringert sich das Reflexionsvermögen an der Oberfläche und die reflektierte Wärmestrahlung nimmt ab, d.h. die gemessene Temperatur erniedrigt sich. Bei der Herstellung von Druckplatten, bei denen auf Aluminiumbänder lichtempfindliche Schichten aufgetragen werden, wird beispielsweise die Dicke dieser lichtempfindlichen Schichten nach dem Antragwerk hinter der Trocknungszone gemessen. Mit zunehmender Beschichtungsdicke nimmt die gemessene Infrarottemperatur ab.

Das Meßverfahren kann auch dazu dienen, die Dicken von transparenten Folienbahnen zu bestimmen. Hierzu wird die Meßanordnung oberhalb der Stahlwalze 6 angebracht, die bei Folienreckanlagen spiegelglatt ist und einen sehr niedrigen Absorptionswert besitzt und über die die Folienbahn während des Produktionsprozesses transportiert wird.

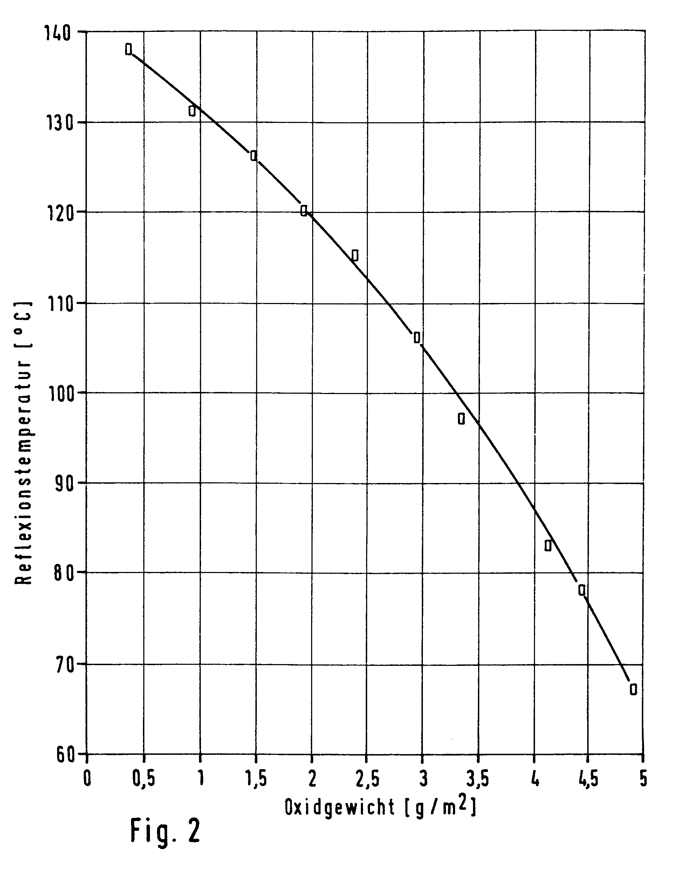

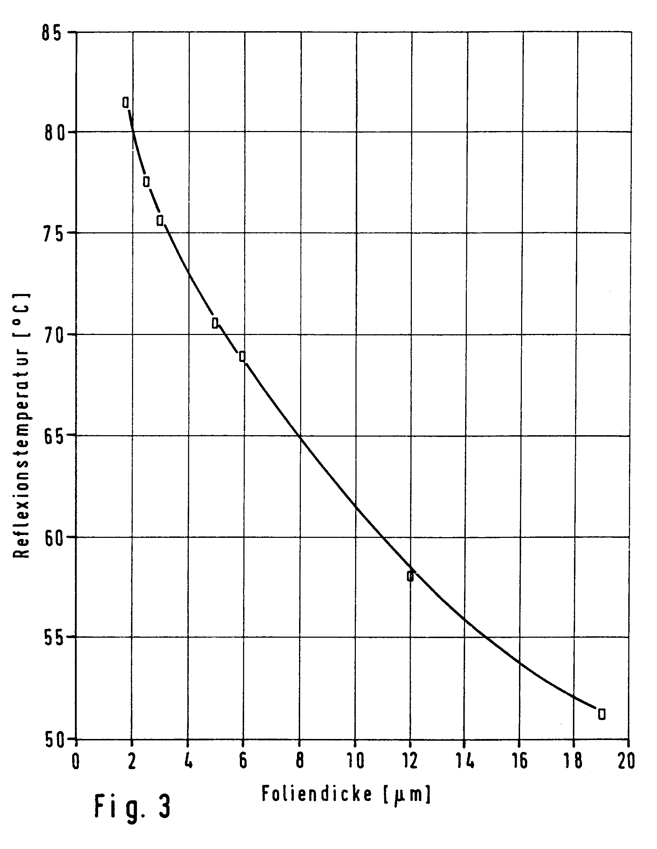

Die Figuren 2 und 3 zeigen in Diagrammen die Abhängigkeit der gemessenen Temperatur der reflektierten Infrarotstrahlung, kurz als Reflexionstemperatur in °C bezeichnet, von dem Aluminiumoxidgewicht in g/m² eines Aluminiumbandes und von der Foliendicke in µm einer Polyesterfolie. Bei dem Diagramm nach Figur 2 wird die Temperatur des Infrarotstrahlers 2 der Meßanordnung konstant auf 200 °C gehalten, und das Aluminiumband durchläuft ein Säurebad aus Salzsäure, in dem es aufgerauht wird.

Wie dem Diagramm zu entnehmen ist, sinkt mit steigendem Oxidgewicht die Temperatur der reflektierten Strahlung. Dieser Temperaturverlauf wird für ein Aluminiumband bestimmter Zusammensetzung als charakteristische Kenngröße bzw. Kalibrierkurve in der Vergleichseinrichtung 7 abgespeichert. Wird die Infrarottemperatur bzw. die Temperatur der reflektierten Infrarotstrahlung einer Aluminiumoxidschicht auf dem Aluminiumband gemessen, so kann durch einen Vergleich mit dem abgespeicherten Temperaturverlauf die Dicke der Oxidschicht bestimmt werden. Falls der Wert dieser Oxidschichtdicke von einem gewünschten Sollwert abweicht, wird das Ausgangssignal der Vergleichseinrichtung 7, das ein Maß für die Abweichung nach oben oder unten darstellt, zur Steuerung der Bearbeitungseinrichtung, d.h. im vorliegenden Fall des Säurebades, genutzt. Es wird dann je nach Bedarf entweder die Säurekonzentration erhöht oder erniedrigt oder die Durchlaufgeschwindigkeit des Aluminiumbandes durch das Säurebad geändert. Eine weitere Möglichkeit besteht darin, den elektrischen Strom, der an Elektroden im Säurebad angelegt wird, entsprechend so zu ändern, bis die Werte für die gewünschte Oxidschichtdicke erreicht sind.

Das Diagramm in Figur 3 zeigt einen ähnlichen Verlauf wie das Diagramm in Figur 2 und bezieht sich auf die Abhängigkeit der Temperatur der von einer Polyesterfolie reflektierten Infrarotstrahlung von der Foliendicke in µm. Dabei läuft die Polyesterfolie über eine blanke Stahlwalze. Die Polyesterfolie wird durch den Infrarotstrahler auf einer Temperatur von beispielsweise 373 K bis 393 K gehalten. Mit zunehmender Foliendicke sinkt die gemessene Temperatur der reflektierten Strahlung. Dieser Temperaturverlauf wird in der Weise aufgenommen, daß unterschiedlich dicke Polyesterfolien bei ansonst gleichen Meßbedingungen mit schräg einfallender Infrarotstrahlung beaufschlagt werden und die Temperatur der reflektierten Infrarotstrahlung mittels des Infrarot-Thermometers 3 aufgenommen wird. Diese empirisch gemessene Temperaturkurve bildet dann wieder eine Kenngrößenlinie, die es ermöglicht, aufgrund einer gemessenen Temperatur der reflektierten Strahlung die Dicke der vermessenen Polyesterfolie zu bestimmen. Stellt sich dabei heraus, daß diese Dicke von einem Sollwert abweicht, der über einen Eingang 12 in die Vergleichseinrichtung 7 eingespeist wird, so ergibt sich am Ausgang 8 der Vergleichseinrichtung 7 ein Differenzsignal als Steuersignal für die Folienanlage. Je nach dem Vorzeichen dieses Steuersignals wird dann die Folie stärker oder weniger stark in Längs- und Querrichtung oder in Längsrichtung allein gestreckt.

Mit der Erfindung wird der Vorteil erzielt, daß in einfacher Weise der Zusammenhang zwischen dem Reflexionsvermögen einer Materialoberfläche für Wärmestrahlung und der Oberflächenbeschaffenheit, bedingt durch Oxidschichtgewicht, Dicke einer aufgebrachten Schicht bzw. der Materialdicke, im Falle von transparenten Kunststoffolien, mit geringem apparativem Aufwand genutzt werden kann. Sowohl der verwendete Infrarotstrahler als auch das Infrarot-Thermometer sind handelsübliche Geräte.

## Patentansprüche

1. Verfahren zur berührungslosen on-line-Messung der Oberflächenstruktur oder der Dicke eines Materials (5) oder einer Schicht (5b) auf einem platten- oder bandförmigen Material, wobei ein umrissener Meßbereich (4) der Materialoberfläche auf konstanter Temperatur gehalten wird, der Meßbereich (4) mit schräg einfallender Infrarotstrahlung (10) eines Infrarotstrahlers (2) beaufschlagt wird und im Sichtfeld einer Meßeinrichtung (3) für die reflektierte Strahlung liegt, und die Temperatur der vom Meßbereich auf der Materialoberfläche reflektierten Infrarotstrahlung (11) gemessen und mit einer Kalibrierkurve verglichen wird, die so erstellt wird, daß bei gleichbleibender Temperatur des Infrarotstrahlers (2) die Temperatur der von der Oberfläche reflektierten Infrarotstrahlung für unterschiedliche Oberflächenstrukturen bzw. Dicken des Materials (5) gemessen wird.

2. Verfahren nach Anspruch 1, wobei die gemessene Temperatur der reflektierten Infrarotstrahlung (11) mit einem Sollwert der Temperatur verglichen wird und daß aus dem Vergleich ein Signal für die Steuerung der Behandlung der Materialoberfläche erhalten wird.

3. Verfahren nach Anspruch 1, wobei das Material (5) im Meßbereich (4) durch einen Infrarotstrahler (2) mit Infrarotstrahlung (10) konstanter Temperatur, bevorzugt im Bereich von 373 bis 393 K, bestrahlt wird.

4. Verfahren nach Anspruch 1, wobei die Oberflächentemperatur des Infrarotstrahlers (2), der den Meßbereich (4) der Materialoberfläche mit schräg einfallender Infrarotstrahlung (10) beaufschlagt, während des Meßvorgangs konstantgehalten wird.

5. Verfahren nach Anspruch 1, wobei die Dicke einer Schicht (5b) auf einem Material (5) gemessen wird, das bei unbeschichteter Oberfläche ein hohes Reflexionsvermögen für Infrarotstrahlung aufweist.

6. Verfahren nach Anspruch 5, wobei das Material (5) aus Aluminium besteht, dessen Oberfläche eine Aluminiumoxidschicht trägt, und wobei die Dicke der Aluminiumoxidschicht, die die Oberflächenbeschaffenheit des Materials bestimmt, gemessen wird.

7. Verfahren nach Anspruch 5, wobei das Material (5) Aluminium ist, dessen Oberfläche mit einer lichtempfindlichen Schicht bedeckt ist, und wobei die Dicke der lichtempfindlichen Schicht gemessen wird.

8. Verfahren nach Anspruch 1, wobei das Material (5) aus einer Kunststoffolie besteht, und wobei die Dicke der Kunststoffolie gemessen wird.

9. Meßanordnung zur berührungslosen on-line-Messung der Oberflächenstruktur oder der Dicke eines Materials (5) oder einer Schicht (5b) auf einem platten- oder bandförmigen Material, wobei die Meßanordnung (1) aus einem Infrarotstrahler (2) und einem Infrarot-Thermometer (3) besteht, der Strahlengang (10) des Infrarotstrahlers schräg auf die Materialoberfläche innerhalb eines umrissenen Meßbereiches (4) gerichtet ist, der gesamte Meßbereich (4) der Materialoberfläche, der im Sichtfeld des Infrarot-Thermometers (3) liegt, mit Infrarotstrahlung im Bereich von 373 bis 393 K beaufschlagt ist, eine Vergleichseinrichtung (7) vorhanden ist, in der der Temperaturverlauf der von der Materialoberfläche reflektierten Strahlung in Abhängigkeit von Oberflächenstrukturen, wie Schichtdicke, Oxidgewicht, oder von der Materialdicke abgespeichert ist, und wobei mittels der Vergleichseinrichtung (7) die Temperatur der reflektierten Infrarotstrahlung (11) mit dem gespeicherten Temperaturverlauf vergleichbar ist, um die der gemessenen Temperatur entsprechende Oberflächenstruktur bzw. Materialdicke zu bestimmen.

10. Meßanordnung nach Anspruch 9, wobei sie eine blanke, beheizte Stahlwalze (6) mit umfaßt, über die das Material (5) geführt ist, das mit schräg einfallender Infrarotstrahlung beaufschlagt ist,

11. Meßanordnung nach Anspruch 9, wobei ein Sollwert der Temperatur in die mit der Meßanordnung verbundene Vergleichseinrichtung (7) eingespeist und mit den jeweiligen gemessenen Temperaturwerten verglichen wird, um aus dem Differenzsignal ein Steuersignal zu erhalten, und wobei ein Ausgang (8) der Vergleichseinrichtung (7) mit einer Steuerung (9) einer Bearbeitungseinrichtung für das Material verbunden ist.

## Claims

1. A method of contactless on-line measurement of the surface structure or the thickness of a material (5) or a layer (5b) on a material in plate or strip form, in which an outlined measuring area (4) of the material surface is kept at a constant temperature, the measuring area (4) is exposed to obliquely incident infrared radiation (10) of an infrared radiator (2) and lies in the field of coverage of a measuring device (3) for the reflected radiation, and the temperature of the infrared radiation (11) reflected from the measuring area on the material surface is measured and compared with a calibrating curve, which is set up in such a way that, with constant temperature of the infrared radiator (2), the temperature of the infrared radiation reflected from the surface is measured for different surface structures or thicknesses of the material (5).

2. The method as claimed in claim 1, in which the measured temperature of the reflected infrared radiation (11) is compared with a set value of the temperature and that [sic] from the comparison a signal is obtained for controlling the treatment of the material surface.

3. The method as claimed in claim 1, in which the material (5) in the measuring area (4) is irradiated by an infrared radiator (2) with infrared radiation (10) of constant temperature, preferably in the range from 373 to 393 K.

4. The method as claimed in claim 1, in which the surface temperature of the infrared radiator (2), which exposes the measuring area (4) of the material surface to obliquely incident infrared radiation (10), is kept constant during the measuring operation.

5. The method as claimed in claim 1, in which the thickness of a layer (5b) on a material (5) which, with uncoated surface, has a high reflectivity for infrared radiation is measured.

6. The method as claimed in claim 5, in which the material (5) is composed of aluminum, the surface of which bears an aluminum oxide layer, and in which the thickness of the aluminum oxide layer, which determines the surface condition of the material, is measured.

7. The method as claimed in claim 5, in which the material (5) is aluminum, the surface of which is covered by a light-sensitive layer, and in which the thickness of the light-sensitive layer is measured.

8. The method as claimed in claim 1, in which the material (5) is composed of a plastics film and in which the thickness of the plastics film is measured.

9. A measuring arrangement for contactless on-line measurement of the surface structure or the thickness of a material (5) or a layer (5b) on a material in plate or strip form, in which the measuring arrangement (1) comprises an infrared radiator (2) and an infrared thermometer (3), the path of rays (10) of the infrared radiator is directed obliquely onto the material surface within an outlined measuring area (4), the entire measuring area (4) of the material surface which lies in the field of coverage of the infrared thermometer (3) is exposed to infrared radiation in the range from 373 to 393 K, a comparison device (7) is present, in which the temperature variation of the radiation reflected from the material surface in dependence on surface structures, such as layer thickness or oxide weight, or on the material thickness is stored, and in which, by means of the comparison device (7), the temperature of the reflected infrared radiation (11) can be compared with the stored temperature variation, in order to determine the surface structure or material thickness corresponding to the measured temperature.

10. The measuring arrangement as claimed in claim 9, which comprises a bright, heated steel roll (6) over which is passed the material (5) which is exposed to obliquely incident infrared radiation.

11. The measuring arrangement as claimed in claim 9, in which a set value of the temperature is fed into the comparison device (7) connected to the measuring arrangement and is compared with the respective measured temperature values, in order to obtain a control signal from the differential signal, and in which an output (8) of the comparison device (7) is connected to a control (9) of a treatment device for the material.

## Revendications

1. Procédé pour la mesure en ligne et sans contact de la structure superficielle ou de l'épaisseur d'un matériau (5) ou d'une couche (5b) sur un matériau en forme de place ou de bande, dans lequel une zone de mesure (4) à contour déterminé de la surface du matériau est maintenue à une température constante, la zone de mesure (4) est frappée par le rayon infrarouge (10), pénétrant obliquement, d'un émetteur de rayonnement infrarouge (2) et se trouve dans le champ de vision d'un dispositif de mesure (3) pour le rayon réfléchi, la température du rayon infrarouge (11), réfléchi par la zone de mesure sur la surface du matériau est mesurée et comparée à une courbe d'étalonnage qui est construite de manière qu'à température constante de l'émetteur de rayonnement infrarouge (2), la température du rayon infrarouge réfléchi par la surface soit mesurée pour diverses structures superficielles ou épaisseurs du matériau (5).

2. Procédé selon la revendication 1, dans lequel la température mesurée du rayon infrarouge réfléchi (11) est comparée à une valeur de consigne de la température et, à partir de la comparaison, on obtient un signal pour la commande du traitement de la surface du matériau.

3. Procédé selon la revendication 1, dans lequel le matériau (5) est exposé aux rayons, dans la zone de mesure (4), au moyen d'un émetteur de rayonnement infrarouge (2), par un rayonnement infrarouge (10) à température constante, de préférence dans la plage allant de 373 à 393 K.

4. Procédé selon la revendication 1, dans lequel la température de la surface de l'émetteur de rayonnement infrarouge (2), qui vient frapper la zone de mesure (4) de la surface du matériau, par un rayon infrarouge (10) pénétrant obliquement, est maintenue constante pendant le processus de mesure.

5. Procédé selon la revendication 1, dans lequel l'épaisseur d'une couche (5b) est mesurée sur un matériau (5) qui présente, dans le cas d'une surface non revêtue, un haut pouvoir de rélexion pour un rayon infrarouge.

6. Procédé selon la revendication 5, dans lequel le matériau (5) est constitué d'aluminium dont la surface porte une couche d'oxyde d'aluminium, et dans lequel on mesure l'épaisseur de la couche d'oxyde d'aluminum qui détermine la constitution de la surface du matériau.

7. Procédé selon la revendication 5, dans lequel le matériau (5) est en aluminium, dont la surface est recouverte d'une couche photosensible, et dans lequel on mesure l'épaisseur de la couche photosensible.

8. Procédé selon la revendication 1, dans lequel le matériau (5) est constitué d'une pellicule de matière plastique et dans lequel on mesure l'épaisseur de la pellicule de matière plastique.

9. Dispositif de mesure pour la mesure en ligne et sans contact de la structure superficielle ou de l'épaisseur d'un matériau (5) ou d'une couche (5b) sur un matériau en forme de plaque ou de bande, dans lequel le dispositif de mesure (1) consiste en un émetteur de rayonnement infrarouge (2) et en un thermomètre infrarouge (3), le cheminement du rayon (10) de l'émetteur de rayonnement infrarouge est orienté obliquement sur la surface du matériau dans une zone de mesure (4) à contour déterminé, la totalité de la zone de mesure (4) de la surface du matériau, qui se trouve dans le champ de vision du thermomètre infrarouge (3), est frappée par un rayon infrarouge dans la plage allant de 373 à 393 K, est présent un dispositif de mesure (7) dans lequel la courbe de température du rayon réfléchi par la surface du matériau est enregistrée en fonction de structures superficielles telles qu'épaisseur de couche, poids d'oxyde ou en fonction de l'épaisseur du matériau, et dans lequel, au moyen du dispositif comparatif (7), la température du rayon infrarouge réfléchi (11) est comparable avec la courbe de température enregistrée, afin de déterminer la structure de la surface ou l'épaisseur du matériau correspondant à la température mesurée.

10. Dispositif de mesure selon la revendication 9, comprenant un cylindre d'acier (6) poli chauffé, sur lequel est envoyé le matériau (5) qui est frappé par un rayon infrarouge pénétrant obliquement.

11. Dispositif de mesure selon la revendication 9, dans lequel une valeur de consigne de la température est enregistrée dans le dispositif comparatif (7) relié au dispositif de mesure, et est comparée aux valeurs mesurées respectives de la température, pour l'obtention d'un signal de commande à partir du signal de différence, et dans lequel une sortie (8) du dispositif comparatif (7) est reliée à un système de commande (9) d'un dispositif de traitement du matériau.
